(19) Europäisches Patentamt
European Patent Office
Office européen des brevets

(11) **EP 2 489 524 B1**

(12) **EUROPÄISCHE PATENTSCHRIFT**

(45) Veröffentlichungstag und Bekanntmachung des Hinweises auf die Patenterteilung:
**23.11.2016 Patentblatt 2016/47**

(51) Int Cl.:
**B42D 25/29** (2014.01)   **G02B 5/18** (2006.01)
**G07D 7/00** (2016.01)   **B29D 11/00** (2006.01)

(21) Anmeldenummer: **12000348.8**

(22) Anmeldetag: **20.01.2012**

(54) **Gitterbild mit Wölbeffekt**

Grid image with bulge effect

Image tramée dotée d'un effet de gondolement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.02.2011 DE 102011011349**

(43) Veröffentlichungstag der Anmeldung:
**22.08.2012 Patentblatt 2012/34**

(73) Patentinhaber: **Giesecke & Devrient GmbH**
**81677 München (DE)**

(72) Erfinder:
• **Amthor, Falk**
**83734 Hausham (DE)**

• **Dichtl, Marius, Dr.**
**81371 München (DE)**
• **Keller, Mario**
**83358 Seebruck (DE)**

(74) Vertreter: **Zeuner Summerer Stütz**
**Patent- und Rechtsanwälte**
**Partnerschaft**
**Nußbaumstraße 8**
**80336 München (DE)**

(56) Entgegenhaltungen:
**WO-A1-2010/034420    WO-A2-2009/074122**
**DE-A1- 10 308 327    DE-A1-102007 009 646**
**JP-A- 2006 327 129    US-A1- 2001 003 035**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Gitterbild zur Darstellung eines mit einem schimmernden dreidimensionalen Wölbeffekt erscheinenden Motivs mit einer Umrisskontur, wobei das Gitterbild eine diffraktive Gitterstruktur aufweist, die eine Vielzahl von geraden und/ oder gekrümmten Gitterlinien enthält und die bei Beleuchtung für einen Betrachter das Motiv mit dem schimmernden dreidimensionalen Wölbeffekt erzeugt.

Zur Echtheitsabsicherung von Kreditkarten, Banknoten und anderen Wertdokumenten werden seit einigen Jahren Hologramme, holographische Gitterbilder und andere hologrammähnliche Beugungsstrukturen eingesetzt. Im Banknoten- und Sicherheitsbereich werden im Allgemeinen holographische Beugungsstrukturen verwendet, die sich durch Prägung von holographisch erzeugten Gitterbildern in thermoplastisch verformbare Kunststoffe oder UV-härtbare Lacke auf Foliensubstraten herstellen lassen.

Echte Hologramme entstehen dabei durch Beleuchtung eines Objekts mit kohärentem Laserlicht und Überlagerung des von dem Objekt gestreuten Laserlichts mit einem unbeeinflussten Referenzstrahl in einer lichtempfindlichen Schicht. Sogenannte holographische Beugungsgitter erhält man, wenn die in der lichtempfindlichen Schicht überlagerten Lichtstrahlen aus räumlich ausgedehnten, einheitlichen kohärenten Wellenfeldern bestehen. Die Einwirkung der überlagerten Wellenfelder auf die lichtempfindliche Schicht, wie etwa einen photographischen Film oder eine Photoresistschicht, erzeugt dort ein holographisches Beugungsgitter, das beispielsweise in Form heller und dunkler Linien in einem photographischen Film oder in Form von Bergen und Tälern in einer Photoresistschicht konserviert werden kann. Da die Lichtstrahlen in diesem Fall nicht durch ein Objekt gestreut worden sind, erzeugt das holographische Beugungsgitter lediglich einen optisch variablen Farbeindruck, jedoch keine Bilddarstellung.

Die Druckschrift WO 2005/038500 A1 beschreibt ein Verfahren zum Erzeugen von Gitterbildern, bei dem ein Gitterbild aus mehreren Teilbereichen zusammengesetzt wird, die jeweils ein bestimmtes Beugungsgitter mit einer einheitlichen Gitterkonstante und einer einheitlichen Winkelorientierung enthalten. Die diffraktiven Teilbereiche liegen dabei in flächenförmiger, streifenförmiger oder pixelartiger Ausführung nebeneinander. Solche Beugungsgitter lassen sich durch direkte oder indirekte optische Belichtung, Prägemastering oder Elektronenstrahllithographie herstellen.

Ebenfalls bekannt sind Mattstrukturbilder, die sich aus Teilbereichen zusammensetzen, die nicht beugende, sondern streuende Gitter enthalten. So sind in der Druckschrift WO 2005/071444 A2 Gitterfelder mit Strichgitterlinien beschrieben, die durch die Parameter Orientierung, Krümmung, Beabstandung und Profilierung charakterisiert sind, wobei zumindest einer dieser Parameter über der Fläche des Gitterfelds variiert. Variiert zumindest einer der Parameter zufällig, so ergeben sich sogenannte Mattstrukturen, die bei Betrachtung keine diffraktiven Effekte, sondern Streueffekte zeigen und ein mattes, vorzugsweise keinerlei Farbigkeit zeigendes Erscheinungsbild aufweisen.

Achromatische Mattstruktur-Gitterbilder, die ein vorbestimmtes Motiv mit einem relief- oder linsenartigen dreidimensionalen Eindruck darstellen, sind in der Druckschrift WO 2010/034420 A1 beschrieben. Dabei werden die Gittermusterparameter Orientierung, Beabstandung und Profilierung in den Gitterfeldern des Gitterbilds einerseits mit einer vorgegebenen Streuung zufällig variiert, andererseits wird zumindest die mittlere Orientierung von Gitterfeld zu Gitterfeld diskret verändert. Das Gitterbild erscheint für einen Betrachter dann reliefartig und mit einem nicht-farbigen, silbrigmatten Erscheinungsbild.

Die Druckschrift DE 10 2007 009646 A1 betrifft ein Gitterbild mit zwei oder mehr Gitterfeldern, die jeweils ein elektromagnetische Strahlung beeinflussendes Gittermuster aus einer Vielzahl von Strichgitterlinien enthalten, wobei zumindest ein Gitterfeld ein achromatisches Gitterfeld mit einem betrachtungswinkelabhängigen visuellen Erscheinungsbild ist. Die Gitterfelder sind aus ineinander verschachtelten Teilbereichen gebildet, deren Ausdehnung in zumindest einer Dimension unterhalb der Auflösungsgrenze des bloßen Auges liegt.

Die DE 103 08 327 A1 betrifft eine Gitterstruktur zur Absicherung von Wertgegenständen, die wenigstens einen ersten Teilbereich mit einer Gitterkonstanten aufweist, die kleiner ist als die Wellenlänge, bei welcher der Teilbereich betrachtet wird. Sie liegt in diesem Teilbereich in Form einer Reliefstruktur mit einer definierten Reliefhöhe vor, so dass bei Betrachtung in einem bestimmten Spektralbereich ein Nullte-Ordnung-Gitterbild beobachtbar ist. Dieser Teilbereich weist in wenigstens einer Richtung eine Ausdehnung kleiner 0,5 mm auf.

Die WO 2009/074122 A2 offenbart ein Sicherheitselement mit einem statischen Identifikationsmuster, das beim Drehen des damit geschützten Objekts um eine Achse senkrecht zur Ebene des Sicherheitselements statisch bleibt.

Die JP 2006 327129 A betrifft ein fälschungssicheres Informationsaufzeichnungsmedium dessen versteckte Information mit einer vorgegebenen Lichtquelle zuverlässig ausgelesen werden kann. Die Druckschrift US 2001/003035 A1 beschreibt hochwertige Beugungsgitter, die auf speziell orientierten Substraten mit sorgfältig gewählten Blaze-Winkeln und defektfreien reflektierenden Oberflächen hergestellt werden können.

Ausgehend davon liegt der Erfindung die Aufgabe zugrunde, ein Gitterbild der eingangs genannten Art weiter zu verbessern und insbesondere ein Gitterbild zu schaffen, das ein attraktives visuelles Erscheinungsbild mit hoher Fälschungssicherheit kombiniert.

Diese Aufgabe wird durch das Gitterbild mit den Merkmalen des Hauptanspruchs gelöst. Ein Herstellungsverfahren, ein Sicherheitselement, ein Sicherheitspapier und ein Datenträger mit einem solchen Gitterbild, sowie eine Prägeform zum Erzeugen einer entsprechenden Prägestruktur sind in den nebengeordneten Ansprüchen angegeben. Weiterbildungen der Erfindung sind Gegenstand der abhängigen Ansprüche.

Gemäß der Erfindung ist die diffraktive Gitterstruktur eines gattungsgemäßen Gitterbilds in eine Vielzahl von Teilelementen unterteilt, die jeweils mit ununterbrochenen Gitterlinien gefüllt sind und die voneinander durch weniger als 100 μm lange und quer zu den Gitterlinien verlaufende Trennbereiche getrennt sind. Die ununterbrochenen Gitterlinien sind dabei in den Teilelementen mit stufenförmig variierenden Abständen und mit unregelmäßig eingestreuten Gitterlinienfehlstellen angeordnet.

Die Größe der Teilelemente kann konstant sein oder sich kontinuierlich ändern. Bevorzugt weisen die Teilelemente allerdings unregelmäßig variierende Abmessungen, also unregelmäßig variierende Länge und/oder Breite auf. Stellt das vorgegebene Motiv Buchstaben, Ziffern oder Symbole dar, so ist die Breite der Teilelemente vorzugsweise im Wesentlichen durch die Strichstärke des Motivs gegeben.

Die Länge der Teilelemente, also der Abstand benachbarter Trennbereiche, liegt typischerweise zwischen 50 μm und 3 mm, vorzugsweise zwischen 200 μm und 800 μm und beispielsweise bei etwa 500 μm. Die Länge der Teilelemente kann von Teilelement zu Teilelement zufällig zu- oder abnehmen, die Änderung kann jedoch auch determiniert erfolgen, beispielsweise entsprechend einer Sinusfunktion. Determinierte und zufällige Variationen können auch kombiniert werden, beispielsweise indem die Länge des i-ten Teilelements gewählt wird zu

$$L_i = L_0 + L_1 \cdot \sin(2\pi \cdot i / N) + L_2 \cdot \text{rand}(-1,1),$$

wo $L_0$ eine mittlere Länge, beispielsweise $L_0 = 500$ μm, angibt, $L_1$ die Amplitude einer sinusförmigen Variation, beispielsweise $L_1 = 100$ μm, angibt, $L_2$ die Amplitude einer zufälligen Variation, beispielsweise $L_2 = 25$ μm, angibt, N die Periodizitätslänge, beispielsweise N = 10 ist, und rand(-1,1) eine Funktion ist, die eine Zufallszahl im Intervall [-1,1] liefert.

Vorzugsweise weisen die Teilelemente zusätzlich gekrümmte Begrenzungslinien auf. Im Allgemeinen sind die Angaben von Länge und Breite eines Teilelements dann als mittlere Länge bzw. mittlere Breite zu verstehen. Besonders bevorzugt sind Gestaltungen, bei denen die Teilelemente bezüglich der Umrisskontur des Motivs verdreht, verschraubt oder verdrillt sind.

Die Breite der Trennbereiche entspricht der Breite der angrenzenden Teilelemente. Die Länge der Trennbereiche, die auch den Abstand der angrenzenden Teilelemente voneinander angibt, liegt zweckmäßig zwischen 1 μm und 70 μm, vorzugsweise zwischen 5 μm und 50 μm und besonders bevorzugt zwischen 10 μm und 30 μm. Falls die Teilelemente mit gekrümmten Begrenzungslinien ausgebildet sind, trifft dies auch für die Trennbereiche zu. Die Trennbereiche verlaufen stets quer zu den Gitterlinien, mit denen die Teilelemente gefüllt sind und unterbrechen somit deren Verlauf. Der Winkel unter dem die Trennbereiche die Gitterlinien schneiden, liegt typischerweise zwischen 45° und 90°, kann in manchen Gestaltungen jedoch auch kleiner sein.

Der Abstand der Gitterlinien variiert zwischen 0,5 μm und 2 μm stufenförmig und zwar vorteilhaft mit einer unregelmäßig variierenden Stufenbreite. Die einzelnen Stufen weisen dabei mit Vorteil jeweils zwischen 2 und 7 Gitterlinien mit gleichem Abstand zur nächsten Gitterlinie auf. Die schmalstmögliche Stufe umfasst somit 3 benachbarte Gitterlinien $G_i$, $G_{i+1}$, $G_{i+2}$, wobei die beiden Abstände $G_i$ zu $G_{i+1}$ und $G_{i+1}$ zu $G_{i+2}$ gleich sind. Vorteilhaft liegt die Stufenbreite zudem zwischen 1,0 μm bis 11,5 μm. Gegenwärtig weniger bevorzugt, jedoch im Rahmen der Erfindung ebenfalls möglich, sind größere Stufenbreiten, beispielsweise bis zu 50 μm oder sogar bis zu 300 μm. Die Ausprägung des dreidimensionalen Wölbeffekts nimmt mit zunehmender Stufenbreite ab, bis das Gitterbild in eine pumpende Gitterstruktur mit nur noch geringem Wölbeffekt und schließlich ganz ohne Wölbeffekt übergeht.

In die Gitterlinien-Stufen sind erfindungsgemäß in unregelmäßigen Intervallen Gitterlinienfehlstellen eingestreut, um die Fälschungssicherheit des Gitterbilds weiter zu erhöhen. Der Anteil der weggelassenen Gitterlinien liegt vorzugsweise zwischen 1 % und 15 %, bevorzugt zwischen 5 % und 10 %. Durch die Erhöhung des Anteils weggelassener Gitterlinien kann die Helligkeit des Motivs verringert werden, so dass eventuelle Nachbarelemente deutlicher hervortreten.

Am Ort einer Gitterlinienfehlstelle ist der Abstand benachbarter Gitterlinien lokal im Wesentlichen verdoppelt. Sollten mehrere Gitterlinienfehlstellen zufällig nebeneinander liegen, vergrößert sich der Gitterabstand entsprechend. Um die Lücken nicht zu groß werden zu lassen, können auch Vorkehrungen getroffen werden, um sicherstellen, dass zwei Gitterlinienfehlstellen nicht unmittelbar nebeneinanderliegen. Mit der Gitterkonstante steigt auch die Liniendicke der Gitterlinien, gemessen an der Basis der Linie, an. Vorzugsweise werden Gitterlinien mit sinusförmigem Profil, die mittels Elektronstrahllithographie erzeugt werden, eingesetzt.

Werden gekrümmte Gitterlinien verwendet, so sind diese vorteilhaft durch Bezierkurven zweiten Grades, B-Splines oder NURBS, insbesondere mit Startpunkt, Endpunkt und nur einem Kontrollpunkt gebildet, wie weiter unten genauer beschrieben. Eine solche Ausgestaltung vereinigt einen glatten Kurvenlauf und damit hohe Beugungseffizienz mit einer einfachen Kurvenbeschreibung durch nur drei Punkte.

Gemäß einer besonders vorteilhaften Variante der Erfindung verlaufen benachbarte Gitterlinien innerhalb der Teileelemente parallel oder richtungsgleich. Zwei gerade Gitterlinien werden dabei im Rahmen dieser Beschreibung als richtungsgleich bezeichnet, wenn sie sich nicht schneiden und ihre Richtung um weniger als 10°, vorzugsweise um weniger als 5°, insbesondere weniger als 3° oder sogar weniger als 2° voneinander abweicht. In vorteilhaften Gestaltungen weicht die Richtung benachbarter Gitterlinien sogar nur um weniger als 1°, insbesondere weniger als 0,5° oder sogar nur um weniger als 0,2° voneinander ab.

Auch gekrümmte Gitterlinien können parallel oder richtungsgleich verlaufen. Gekrümmte Gitterlinien werden als parallel bezeichnet, wenn sie im gleichen Abstand voneinander verlaufen. Richtungsgleiche gekrümmte Gitterlinien schneiden sich nicht und die lokale Richtung der benachbarten gekrümmten Gitterlinien weicht um weniger als 10°, vorzugsweise um weniger als 5°, insbesondere weniger als 3° oder sogar weniger als 2° voneinander ab. In vorteilhaften Gestaltungen weicht die Richtung benachbarter Gitterlinien sogar nur um weniger als 1°, insbesondere weniger als 0,5° oder sogar nur um weniger als 0,2° voneinander ab.

Das Erfordernis der Richtungsgleichheit benachbarter gerader oder gekrümmter Gitterlinien trägt der Tatsache Rechnung, dass sich die Ausrichtung der Gitterlinien entlang der Breite eines Teileelements langsam ändern kann, beispielsweise weil die Umrisskontur, der die Gitterlinien folgen, auf gegenüberliegenden Seiten des Teileelements jeweils unterschiedliche Ausrichtung aufweist. Wie weiter unten genauer beschrieben, ist das Konzept der Richtungsgleichheit benachbarter Gitterlinien eine natürliche Verallgemeinerung paralleler Gitterlinien auf derartige Gestaltungen. Das Konzept erhält auch die stufenförmig variierenden Abstände der Gitterlinien, wobei lediglich an Stelle des konstanten Abstands zweier paralleler Gitterlinien der mittlere Abstand zweier richtungsgleicher Gitterlinien zu nehmen ist.

Die Gitterlinien der Teileelemente sind vorzugsweise jeweils in Richtung der Umrisskontur des Motivs ausgerichtet. Dabei ist auch möglich, dass die Umrisskontur auf gegenüberliegenden Seiten des Teileelements in unterschiedliche Richtungen zeigt. Die Ausrichtung der Gitterlinien geht dann vorzugsweise von der Ausrichtung entsprechend der Richtung der Umrisskontur auf der einen Seite des Teileelements kontinuierlich in die Ausrichtung entsprechend der Richtung der Umrisskontur auf der gegenüberliegenden Seite des Teileelements über.

Sind die Teileelemente gegenüber der Umrisskontur des Motivs stark verdreht, verschraubt oder verdrillt, so können die Gitterlinien in Richtung der Umrisskontur des Motivs ausgerichtet sein, ohne dem Umriss der Teileelemente zu folgen.

Die Erfindung umfasst auch ein Verfahren zum Herstellen eines Gitterbilds zur Darstellung eines mit einem schimmernden dreidimensionalen Wölbeffekt erscheinenden Motivs mit einer Umrisskontur, bei dem

- in einem Substrat eine diffraktive Gitterstruktur mit einer Vielzahl von geraden und/oder gekrümmten Gitterlinien erzeugt wird,
  und erfindungsgemäß

- die diffraktive Gitterstruktur mit einer Vielzahl von Teileelementen erzeugt wird, die voneinander durch weniger als 100 μm lange und quer zu den Gitterlinien verlaufende Trennbereiche getrennt sind,

- die Teileelemente jeweils mit ununterbrochenen Gitterlinien gefüllt werden, und

- die ununterbrochenen Gitterlinien in den Teileelementen mit stufenförmig variierenden Abständen und mit unregelmäßig eingestreuten Gitterlinienfehlstellen angeordnet werden.

Die diffraktive Gitterstruktur wird dabei mit Vorteil elektronenstrahllithographisch erzeugt.

Die Erfindung umfasst ferner ein Sicherheitselement mit einem Gitterbild der oben beschriebenen Art. Das Gitterbild ist dabei mit besonderem Vorteil mit einem Hologrammelement, einer Mattstruktur und/oder einer farbkippenden Dünnschichtanordnung kombiniert. Derartige Kombinationen sind sehr schwer zu fälschen, da die Technologien für die Herstellung der beteiligten Elemente nur schwer zu beschaffen sind. Darüber hinaus sind durch die Abstimmung der Farbeffekte eines Hologrammelements, einer Mattstruktur oder einer farbkippenden Dünnschichtanordnung einerseits und dem schimmernden Wölbeffekt des beschriebenen Gitterbilds andererseits, attraktive und neuartige visuelle Effekte möglich. Das Sicherheitselement kann insbesondere ein Sicherheitsfaden, ein Etikett oder ein Transferelement sein.

Die Erfindung umfasst auch ein Sicherheitspapier mit einem solchen Sicherheitselement sowie einen Datenträger, der mit einem Gitterbild, einem Sicherheitselement oder einem Sicherheitspapier der beschriebenen Art ausgestattet ist. Bei dem Datenträger kann es sich insbesondere um eine Banknote, ein Wertdokument, einen Pass, eine Ausweis- oder Kreditkarte oder eine Urkunde handeln. Das beschriebene Gitterbild, Sicherheitselement, Sicherheitspapier oder der Datenträger kann zur Absicherung von Gegenständen beliebiger Art eingesetzt werden.

Die Erfindung umfasst auch eine Prägeform zum Erzeugen einer Prägestruktur, mit einem vorzugsweise metallischen Hauptkörper mit einer diffraktiven Gitterstruktur, die eine Vielzahl von geraden und/oder gekrümmten Gitterlinien enthält und die bei Beleuchtung für einen Betrachter ein vorgegebenes Motiv mit einem schimmernden dreidimensionalen Wölbeffekt erzeugt. Die diffraktive Gitterstruktur ist dabei in eine Vielzahl von Teilelementen unterteilt, die jeweils mit ununterbrochenen Gitterlinien gefüllt sind und die voneinander durch weniger als 100 $\mu$m lange und quer zu den Gitterlinien verlaufende Trennbereiche getrennt sind. Die ununterbrochenen Gitterlinien sind in den Teilelementen mit stufenförmig variierenden Abständen und mit unregelmäßig eingestreuten Gitterlinienfehlstellen angeordnet.

Die Prägeform stellt in der Regel die Negativform des in der Prägestruktur gewünschten erfindungsgemäßen Gitterbilds dar. Mithilfe der Prägeform wird das gewünschte Zielsubstrat, beispielsweise eine auf einer Folie aufgebrachte thermoplastische oder UV-härtbare Lackschicht geprägt und so mit dem gewünschten Gitterbild versehen. Entsprechende Verfahren sind dem Fachmann bekannt und im Stand der Technik beschrieben.

Neben den bereits erwähnten und weiter unten genauer ausgeführt Vorteilen eines optisch attraktiven Erscheinungsbilds und einer hohen Fälschungssicherheit, weisen die erfindungsgemäßen Gestaltungen als weiteren Vorteil auf, dass die Datenaufbereitung zur Erzeugung erfindungsgemäßer Gitterbilder bzw. Prägeformen unter Einsatz geeigneter Computerprogramme zu einem großen Teil automatisiert erfolgen kann. Die Datenaufbereitung der Gitterlinien für ein vorgegebenes Motiv mit schimmerndem dreidimensionalem Wölbeffekt kann schnell und überwiegend automatisiert erfolgen. Gleichzeitig weist das Gitterbild durch die getrennten, im Idealfall krummlinig begrenzten und verdrillten Teilelemente, durch die unregelmäßige Stufung der Gitterlinien und die unregelmäßig eingestreuten Gitterlinienfehlstellen eine hohe Komplexität auf, die eine Nachstellung für einen potentiellen Fälscher stark erschwert.

Sowohl die durch die Trennbereiche eingefügte Unterstruktur als auch die Gitterlinienfehlstellen stellen weitere Echtheitsmerkmale dar, die mit einem Hilfsmittel, wie etwa einer Lupe oder einem Mikroskop, geprüft und nachgewiesen werden können.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1 eine schematische Darstellung einer Banknote mit einem erfindungsgemäßen Sicherheitselement,

Fig. 2 eine genauere Aufsicht auf das Sicherheitselements der Fig. 1 mit dem darin enthaltenen Gitterbild,

Fig. 3 einen Detailausschnitt der diffraktiven Struktur des Gitterbilds der Fig. 2,

Fig. 4 die Abhängigkeit des Abstands d benachbarter Gitterlinien in Abhängigkeit vom Ort x entlang der Breite eines Teilbereichs eines erfindungsgemäßen Gitterbilds,

Fig. 5 in (a) und (b) jeweils einen Ausschnitt einer erfindungsgemäßen diffraktiven Gitterstruktur zur Illustration unterschiedlicher Ausgestaltungen der Gitterlinien,

Fig. 6 ein weiteres Ausführungsbeispiel eines erfindungsgemäßen Gitterbilds, bei dem die diffraktive Gitterstruktur in eine Vielzahl stark verdrillter Teilelemente aufgeteilt ist,

Fig. 7 einen Ausschnitt einer erfindungsgemäßen diffraktiven Gitterstruktur zur Illustration des Konzepts der Richtungsgleichheit benachbarter Gitterlinien,

Fig. 8 einen Querschnitt durch ein erfindungsgemäßes Sicherheitselement mit Dünnschichtaufbau, und

Fig. 9 eine Aufsicht auf ein erfindungsgemäßes Sicherheitselement, das eine Kombination eines diffraktiven Hologrammelements, einer Mattstruktur und eines Gitterbilds mit einem schimmernden dreidimensionalen Wölbeffekt aufweist.

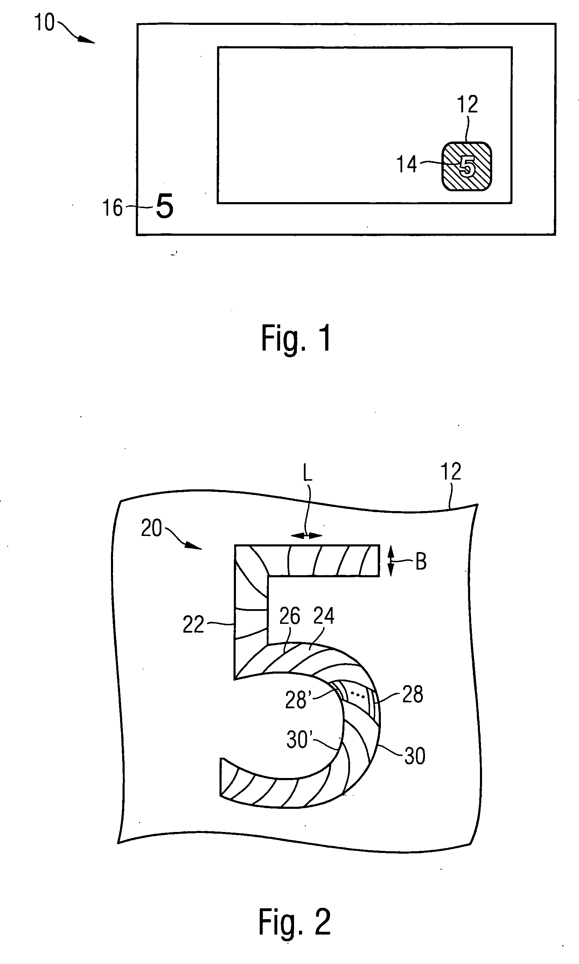

Die Erfindung wird nun am Beispiel von Sicherheitselementen für Banknoten erläutert. Fig. 1 zeigt dazu eine schematische Darstellung einer Banknote 10 mit einem erfindungsgemäßen Sicherheitselement 12, das ein Gitterbild mit einem für einen Betrachter schimmernden dreidimensionalen Wölbeffekt erscheinenden Motiv 14 enthält.

Im Ausführungsbeispiel der Fig.1 ist das Sicherheitselement durch ein auf die Banknote aufgeklebtes Transferelement 12 gebildet. Die Erfindung ist allerdings nicht auf Transferelemente und auf Banknoten beschränkt, sondern kann überall eingesetzt werden, wo Gitterbilder zur Anwendung kommen können, beispielsweise bei Uhrenzifferblättern und Modeschmuck, bei Etiketten auf Waren und Verpackungen, bei Sicherheitselementen auf Dokumenten, Ausweisen, Pässen, Kreditkarten, Gesundheitskarten usw. Bei Banknoten und ähnlichen Dokumenten kommen außer Transferelementen beispielsweise auch Sicherheitsfäden und außer Aufsichtselementen auch Durchsichtselemente, wie Durchsichtsfenster, zur Ausstattung mit Gitterbildern infrage.

Wie in der Aufsicht der Fig. 2 dargestellt, enthält das Sicherheitselement 12 ein Gitterbild 20, das eine diffraktive Gitterstruktur 22 mit einer Vielzahl von Gitterlinien 28, 28' aufweist. Die diffraktive Gitterstruktur 22 ist in eine Vielzahl von Teilelementen 24 unterteilt, die vorzugsweise unregelmäßig variierende Abmessungen und gekrümmte Begrenzungslinien aufweisen.

Wie nachfolgend genauer erläutert, erzeugt die diffraktive Gitterstruktur 22 bei Beleuchtung für einen Betrachter ein vorgegebenes Motiv 14, im Ausführungsbeispiel etwa die Ziffer "5", die zugleich die Denomination 16 der Banknote 10 darstellt. Die gedruckte Denomination 16 wird dadurch im Gitterbild 20 des Sicherheitselements 12 wiederholt und erscheint dort reliefartig mit einem dreidimensionalen, dem Betrachter entgegengewölbten Erscheinungsbild. Neben dem dreidimensionalen Erscheinungsbild weist das Motiv 14 eine schimmernde und glitzernde Oberfläche auf, deren visueller Eindruck dem Schimmern einer CD-Rückseite ähnelt.

Die Größe der Teilelemente 24 kann konstant sein, bevorzugt ändert sich die Längen- und/ oder Breitenverteilung der Teilelemente 24 jedoch kontinuierlich oder, besonders bevorzugt, gemäß einer Zufallsfunktion. Die Breite B der Teilelemente 24 ist im Ausführungsbeispiel im Wesentlichen durch die Strichstärke der Ziffer "5" gegeben, die bei etwa 1 mm liegt, während die mittlere Länge L der Teilelemente 24 bei 500 $\mu$m liegt und von Teilelement zu Teilelement zufällig um einen Wert zwischen 50 $\mu$m und 100 $\mu$m zu- oder abnimmt.

Wie aus Fig. 2 ersichtlich, muss die Aufteilung in Teilelemente 24 nicht senkrecht zur Umrisskontur 30 des vorgegebenen Motivs erfolgen, sondern kann auch verdreht, verschraubt oder verdrillt sein, wie insbesondere am Bauch der Ziffer "5" gezeigt. Auch bei konstanter Strichstärke ist die Breite B der Teilelemente 24 daher in der Regel nicht konstant und übersteigt typischerweise die Strichstärke der dargestellten Ziffer um bis zu 50% oder 100%, in manchen Gestaltungen sogar noch weiter.

Wie aus Gründen der Übersichtlichkeit in Fig. 2 nur angedeutet, ist jedes der Teilelemente 24 mit einer Vielzahl ununterbrochener Gitterlinien 28, 28' gefüllt. Die Gitterlinien 28, 28' können gerade oder gekrümmt sein und weisen, um optisch wirksam zu sein, typischerweise einen Abstand im Bereich von 500 nm bis 1600 nm auf. Wie weiter unten genauer erläutert, ändern sich die Abstände der Gitterlinien 28 einerseits zur Erzeugung des gewünschten visuellen Eindrucks und andererseits zur Erhöhung der Fälschungssicherheit nicht kontinuierlich, sondern stufenförmig. Zudem sind in unregelmäßigen Intervallen einzelne Gitterlinien weggelassen, so dass in den Teilelementen Gitterlinienfehlstellen entstehen.

Die Gitterlinien 28, 28' sind jeweils in Richtung der Umrisskontur 30 des Motivs ausgerichtet. Unterscheidet sich die Richtung der Umrisskontur 30, 30' auf gegenüberliegenden Seiten eines Teilelements 24, so geht die Ausrichtung der Gitterlinien von der Ausrichtung entsprechend der Richtung der Umrisskontur 30 auf der einen Seite des Teilelements (Gitterlinien 28) kontinuierlich in die Ausrichtung entsprechend der Richtung der Umrisskontur 30' auf der gegenüberliegenden Seite des Teilelements (Gitterlinien 28') über.

Die Teilelemente 24 sind voneinander durch schmale, quer zu den Gitterlinien verlaufende Trennbereiche 26 getrennt. Im Ausführungsbeispiel weisen die Trennbereiche 26 eine Länge von 20 $\mu$m auf, je nach Anwendung können jedoch auch andere Längen vorteilhaft sein. Typischerweise liegt die Länge der Trennbereiche 26 im Bereich zwischen 1 $\mu$m und 70 $\mu$m. Die verschiedenen Trennbereiche 26 können, müssen jedoch nicht dieselbe Länge aufweisen. Die Breite eines Trennbereichs 26 entspricht der Breite der angrenzenden Teilelemente 24. In den Trennbereichen 26 liegen keine Gitterlinien vor, so dass der Verlauf der Gitterlinien 28, 28' jeweils an den Trennbereichen 26 unterbrochen wird.

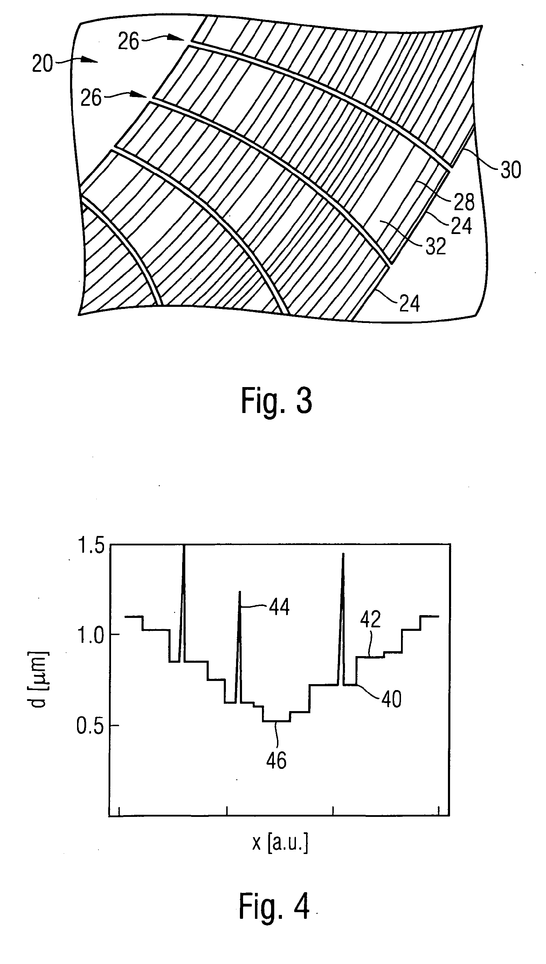

Fig. 3 zeigt einen Detailausschnitt der diffraktiven Struktur 22 des Gitterbilds 20, in dem deutlich zu erkennen ist, wie die Trennbereiche 26 die Teilelemente 24 voneinander abtrennen und die Gitterlinien 28 unterbrechen. Innerhalb jedes Teilelements 24 verlaufen die Gitterlinien 28 dagegen ununterbrochen vom unteren zum oberen Rand des Teilelements und sind dabei in Richtung der Umrisskontur 30 des Motivs ausgerichtet. Eine Ausrichtung in Richtung der Umrisskontur bedeutet dabei nicht, dass die Gitterlinien exakt parallel zur Umrisskontur liegen müssen, wie an anderer Stelle genauer ausgeführt.

Die Abstände der Gitterlinien 28 eines Teilbereichs 24 ändern sich nicht kontinuierlich, sondern stufenförmig und zwar mit einer unregelmäßig variierenden Stufenbreite. Die einzelnen Stufen weisen dabei jeweils zwischen 2 und 7 Gitterlinien mit gleichem Abstand zur nächsten Gitterlinie auf. Mit anderen Worten weisen jeweils $n_i+1$ Gitterlinien mit $n_i = 2,..., 7$ denselben Gitterabstand $d_i$ auf, bevor sich der Gitterabstand für die nächsten Gitterlinien sprunghaft auf einen neuen Wert $d_{i+1}$ ändert. Der globale Verlauf des Gitterabstands, also ohne Berücksichtigung der Stufung verläuft im Ausführungsbeispiel parabelförmig mit einem Minimum etwa in der Mitte der Strichbreite des Motivs "5". Zusätzlich sind in jedem der Teilbereiche 24 in unregelmäßigen Intervallen Gitterlinienfehlstellen 32 eingestreut, also Stellen, an denen einzelne Gitterlinien einer Stufe weggelassen sind.

Insgesamt ergibt sich für die Abstände benachbarter Gitterlinien 28 für jeden Teilbereich 24 somit ein Verlauf, wie schematisch in Fig. 4 dargestellt. Die Kurve 40 zeigt den Gitterabstand benachbarter Gitterlinien in Mikrometern in Abhängigkeit vom Ort x entlang der Breite eines Teilbereichs 24. Die Gitterabstände variieren diskontinuierlich mit Stufen 42 unterschiedlicher Breite. Die kleinstmögliche Stufenbreite umfasst zwei gleiche Gitterlinienabstände (Abstand zwischen Gitterlinien $G_i$ und $G_{i+1}$ und Abstand zwischen Gitterlinien $G_{i+1}$ und $G_{i+2}$), die maximale Stufenbreite beträgt typischerweise sieben gleiche Gitterlinienabstände.

In manchen Gestaltungen, beispielsweise wenn die Stufung visuell erkennbar sein soll, können die Stufen auch eine größere Anzahl an Gitterlinien enthalten, so dass sich die Abstände auf 50 µm bis 300 µm addieren. Die vorzugsweise verwendete Stufenbreite von 2 bis 7 Gitterlinienabständen führt bei den typischen Gitterabständen von 0,5 µm bis 1,6 µm dagegen nur zu mit bloßem Auge nicht wahrnehmbaren Stufenbreiten von 1,0 µm bis 11,2 µm.

Die Orte mit Gitterlinienfehlstellen 32 erscheinen im Kurvenverlauf 40 als einzelne Spitzen 44, da sich dort der Gitterabstand lokal verdoppelt (an einer Stufengrenze ist der Abstand durch $d_i + d_{i+1}$ gegeben). Im Ausführungsbeispiel sind 8% der Gitterlinien 28 zufällig weggelassen. Dies kann beispielsweise dadurch realisiert werden, dass für jede Gitterlinie eine Zufallszahl aus dem Intervall [0,1] erzeugt wird, und die Gitterlinie weggelassen wird, wenn die Zufallszahl kleiner als 0,08 ist.

Der globale Verlauf der Kurve 40, also ohne Berücksichtigung der Stufen 42 und der Spitzen 44, ist in Fig. 4 etwa quadratisch mit einem Minimum 46 in der Mitte des Teilbereichs 24. Entsprechend ist bei dem in Fig. 3 gezeigten Ausschnitt zu erkennen, dass der Abstand der Gitterlinien 28 in der Mitte der Teilbereiche 24 am kleinsten ist und nach außen zur Umrisskontur 30 hin quadratisch zunimmt. Der globale Kurvenverlauf 40 kann jedoch auch andere Formen, beispielsweise mit einem Maximum in der Mitte, mit einem Maximum oder einem Minimum außerhalb der Mitte, mit mehreren Maxima und/ oder Minima oder mit Sattelpunkten aufweisen.

Durch die beschriebenen Maßnahmen entsteht eine Gitterbildgestaltung, die ein attraktives visuelles Erscheinungsbild mit hoher Fälschungssicherheit vereint. Die diffraktive Gitterstruktur 22 zeigt das vorgegebene Motiv 14, etwa die Ziffer "5" der Fig. 2, dabei einerseits dreidimensional, insbesondere linsenartig vor- oder zurückgewölbt. Die Oberfläche des Motivs 14 schimmert vielfarbig, wobei durch die Stufung der Gitterlinienabstände eine höhere Lichtbeugung erreicht und das Schimmern verstärkt wird. Die zufällig variierende Stufengröße stellt gleichzeitig sicher, dass die Stufung als solche für den Betrachter nicht erkennbar ist. Das Schimmern wird weiter durch die Verwendung gekrümmter Linien anstelle der üblichen Stückelung kurzer gerader Linien für die Gitterlinien 28 verstärkt.

Auf der anderen Seite weist das Gitterbild 20 eine hohe Nachahmungssicherheit auf. Wegen der Aufteilung der diffraktiven Struktur in Teilelemente 24 und der unregelmäßigen Größe und der krummlinigen Begrenzung der Teilelemente 24 haben praktisch alle Gitterlinien 28 verschieden große absolute Längen. Der genaue Verlauf der Trennbereiche 26 variiert lokal über die gesamte Fläche des Gitterbilds (Fig. 2) und erfordert so einen hohen Aufwand für die genaue Beschreibung und damit für eine eventuelle Reproduktion.

Die durch die Teilelemente 24 gebildete Unterstruktur mit den Trennbereichen 26 kann mit einer Lupe oder einem Mikroskop ohne Weiteres geprüft und zur visuellen oder maschinellen Authentifizierung eingesetzt werden. Auch die Gitterlinienfehlstellen 32 führen zu einer erhöhten Fälschungssicherheit, da für eine Nachahmung ihre Lage erfasst werden müsste.

Neben der beschriebenen zufälligen Anordnung der Gitterlinienfehlstellen 32 können auch gezielt eingebrachte Fehlstellen, beispielsweise in Form eines Barcodes, vorgesehen werden.

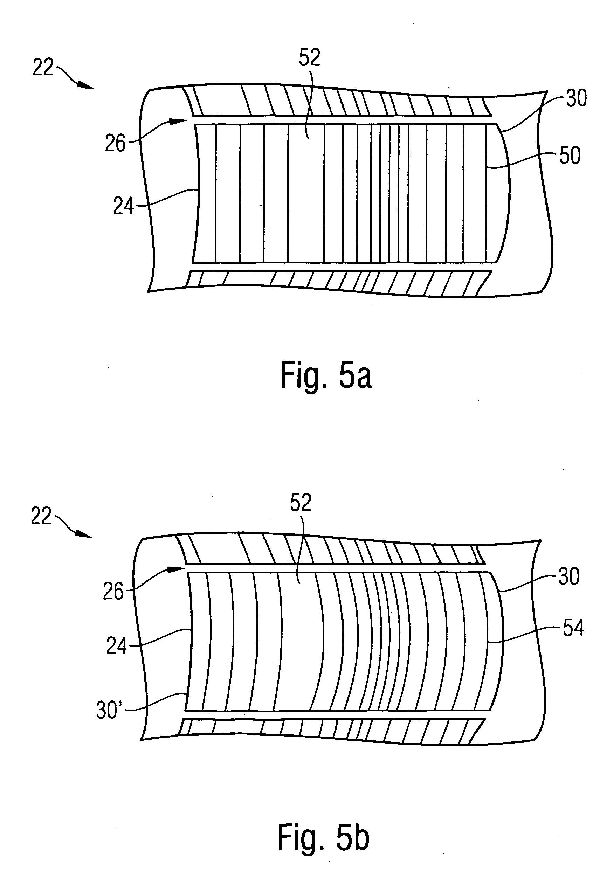

Zur Illustration der unterschiedlichen möglichen Ausgestaltung der Gitterlinien zeigt Fig. 5 in (a) und (b) jeweils einen Ausschnitt einer diffraktiven Gitterstruktur 22 mit Teilelementen 24 und Trennbereichen 26.

Mit Bezug zunächst auf Fig. 5(a) sind die Teilelemente 24 jeweils mit geraden, parallelen Gitterlinien 50 gefüllt. Die Gitterlinien 50 sind in jedem Teilelement 24 in Richtung der Umrisskontur 30 ausgerichtet. Die Abstände der Gitterlinien 50 variieren stufenförmig, zusätzlich sind in unregelmäßigen Intervallen Gitterlinienfehlstellen 52 eingestreut.

Fig. 5(b) zeigt eine Füllung der Teilelemente 24 mit gekrümmten, richtungsgleichen Gitterlinien 54, wobei auch hier die Gitterlinien 54 in Richtung der Umrisskontur 30 ausgerichtet sind. Die Krümmung der Gitterlinien 54 nimmt von der rechten Seite der Umrisskontur 30 zur linken Seite 30' hin ab, so dass die Gitterlinien 54 entlang ihrer Länge nicht vollkommen konstanten Abstand haben können. Sie sind jedoch richtungsgleich, da sie sich nicht schneiden und die lokale Richtung benachbarter Gitterlinien 54 im Ausführungsbeispiel nur um weniger als 2° voneinander abweicht. Auch bei der Gestaltung der Fig. 5(b) variieren die Abstände der Gitterlinien 54 stufenförmig, zusätzlich sind in unregelmäßigen Intervallen Gitterlinienfehlstellen 52 eingestreut.

Die gekrümmten Gitterlinien 54 können vorteilhaft durch Bezierkurven zweiten Grades beschrieben werden, die eine einfache Beschreibung durch einen Startpunkt Po, einen Endpunkt $P_2$ und einen Kontrollpunkt $P_1$ erlauben. Der Kurvenverlauf zwischen Startpunkt Po und Endpunkt $P_2$ ist dabei durch eine quadratische Kurve

$$C(t) = (1-t)^2 P_0 + 2t(1-t) P_1 + t^2 P_2, \text{ mit } t \text{ aus } [0,1]$$

gegeben. Besonders bevorzugt ist die Beschreibung der gekrümmten Gitterlinien 54 durch B-Splines oder deren Verallgemeinerung, den sogenannten NURBS (Non-uniform rational B-splines). Auch dabei wird eine gekrümmte Gitterlinie im einfachsten Fall durch einen Startpunkt, einen Kontrollpunkt und einen Endpunkt festgelegt, wobei der Kontrollpunkt die Krümmung des Kurvenverlaufs zwischen Start- und Endpunkt beschreibt. Im allgemeinen Fall sind auch B-Splines oder NURBS mit mehreren Kontrollpunkten und mit unterschiedlichen Gewichtungen dieser Kontrollpunkte möglich.

Die durch Bezierkurven, B-Splines oder NURBS beschriebenen, gekrümmten Gitterlinien verlangen für ihre Definition im einfachsten Fall nur die Angabe von drei Punkten und führen dennoch zu einem wesentlich glatteren Kurvenverlauf als die üblicherweise eingesetzten gestückelten Geraden. Stärke und Leuchtkraft des Schimmereffekts werden dadurch verstärkt.

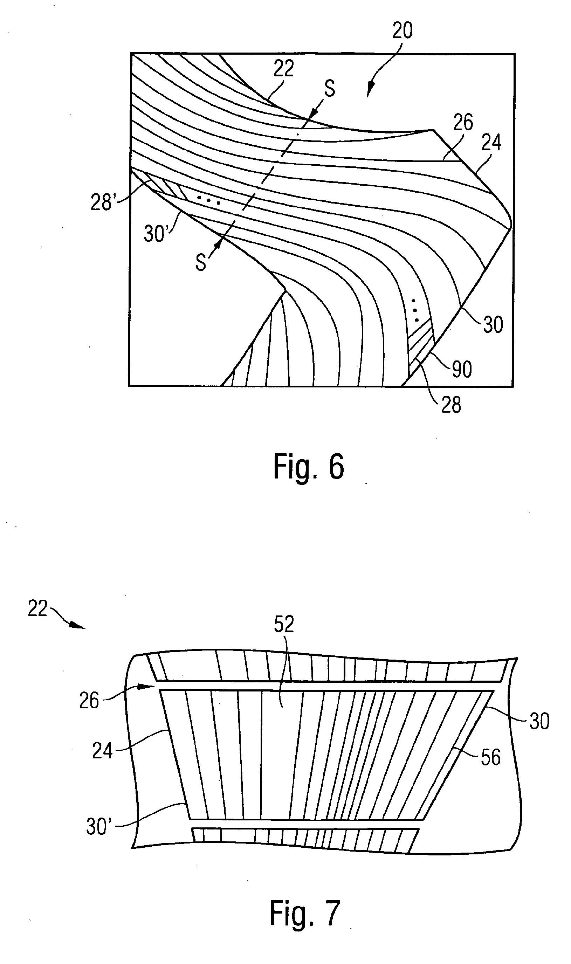

Fig. 6 zeigt ein weiteres Ausführungsbeispiel eines erfindungsgemäßen Gitterbilds 20, bei dem die diffraktive Gitterstruktur 22 in eine Vielzahl stark verdrillter Teilelemente 24 aufgeteilt ist. Jedes Teilelement 24 ist mit einer Vielzahl ununterbrochener Gitterlinien 28, 28' gefüllt, die im Ausführungsbeispiel der einfacheren Darstellung halber gerade sind, im Allgemeinen jedoch auch gekrümmt sein können. Der Übersichtlichkeit halber sind die Gitterlinien 28, 28' nur in einem Teilelement 90 schematisch eingezeichnet.

Wie aus Fig. 6 unmittelbar ersichtlich, ist die Breite der Teilelemente 24, 90 aufgrund der starken Verdrillung wesentlich größer als die Strichstärke S des dargestellten Motivs. Während die Strichstärke S im Ausführungsbeispiel bei etwa 1 mm liegt, liegt die Breite der Teilelemente 24 zwischen 1,5 mm und 6 mm. Die mittlere Länge der Teilelemente 24, also der Abstand benachbarter Trennbereiche 26, liegt bei 500 $\mu$m und variiert von Teilelement zu Teilelement in der oben genauer beschriebenen Weise.

Die Figur illustriert ebenfalls, wie sich die Ausrichtung der Gitterlinien 28 von der Richtung der Umrisskontur 30 auf einer Seite eines Teilelements 90 entlang der Breite des Teilelements kontinuierlich verändert und schließlich in eine Ausrichtung der Gitterlinien 28' in Richtung der Umrisskontur 30' auf der gegenüberliegenden Seite des Teilelements 90 übergeht. Obwohl die Gitterlinien 28, 28' somit nicht mehr im strengen Sinn parallel zueinander sein können, sind sie richtungsgleich, da sie sich nicht schneiden und die Richtung benachbarter Gitterlinien im Ausführungsbeispiel um maximal 0,2° voneinander abweicht.

Das Konzept der Richtungsgleichheit benachbarter Gitterlinien ist in Fig. 7 nochmals genauer erläutert. Fig. 7 zeigt einen Ausschnitt einer diffraktiven Gitterstruktur 22 mit Teilelementen 24 und Trennbereichen 26, wobei die Teilelemente 24 mit geraden, richtungsgleichen Gitterlinien 56, 56' gefüllt sind. Die Gitterlinien 56, 56' sind auf den gegenüberliegenden Seiten des Teilelements 24 jeweils in Richtung der Umrisskontur 30, 30' ausgerichtet. Da sich die Richtung der Umrisskontur 30, 30' auf den gegenüberliegenden Seiten des Teilelements 24 unterscheidet, verändert sich die Richtung der Gitterlinien 56 entlang der Breite der Teilelements 24 kontinuierlich, ohne dass sich benachbarte Gitterlinien dabei schneiden.

Die Richtungsänderung pro Gitterlinie ist dabei durch die Anzahl der Gitterlinien und die insgesamt notwendige Richtungsänderung bestimmt. Dabei ist zu beachten, dass die schematische Darstellung der Fig. 7 zur Illustration nur wenige Gitterlinien 56, 56' zeigt. In der Praxis sind bei Gitterabständen zwischen 0,5 $\mu$m und 2 $\mu$m mehrere hundert oder sogar einige tausend Gitterlinien entlang der Breite eines Teilbereichs 24 angeordnet. Selbst wenn die Richtungen der Umrisskontur 30, 30' auf den gegenüberliegenden Seiten des Teilbereichs 24 stark voneinander abweichen, ist die notwendig Richtungsänderung pro Gitterlinie sehr klein. So erfordert eine Richtungsänderung um 100° bei 1000 Gitterlinien beispielsweise nur eine Richtungsänderung von 0,1° pro Gitterlinie.

Wie in Fig. 7 weiter ersichtlich, kann auch bei richtungsgleichen Gitterlinien von stufenförmig variierenden Abständen der Gitterlinien gesprochen werden. Dabei tritt lediglich an Stelle des entlang der Länge der Gitterlinien stets konstanten Abstands zweier paralleler Gitterlinien der mittlere Abstand zweier richtungsgleicher Gitterlinien. Die Richtungsgleichheit benachbarter Gitterlinien ist somit eine natürliche Verallgemeinerung paralleler Gitterlinien auf Fälle, in denen die Umrisskontur auf den gegenüberliegenden Seiten des Teilelements unterschiedliche Richtung aufweist.

In bevorzugten Ausgestaltungen ist ein erfindungsgemäßes Gitterbild mit weiteren Sicherheitsmerkmalen, insbesondere mit einem Hologrammelement, einer Mattstruktur und/ oder einer farbkippenden Dünnschichtanordnung, kombiniert.

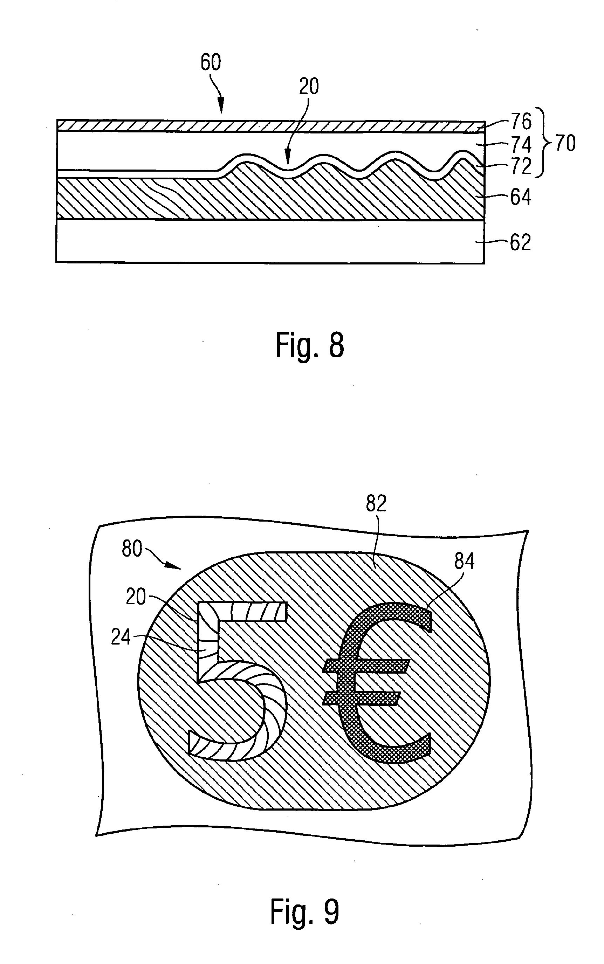

Zur Illustration zeigt Fig. 8 im Querschnitt ein Sicherheitselement 60 mit einem Gitterbild 20 der in Fig. 2 gezeigten Art. Das Sicherheitselement 60 enthält ein transparentes Folienmaterial 62 mit einer Lackschicht 64, in die das Gitterbild 20 eingeprägt ist. Darüber ist ein vollflächiger Dünnschichtaufbau 70 aufgedampft, der im Ausführungsbeispiel aus einer Absorberschicht 72, einer hochbrechenden dielektrischen Schicht 74 und einer reflektierenden Schicht 76 besteht. Die Schichten des Dünnschichtaufbaus 70 wurden dabei im Vakuumdampfverfahren aufgebracht.

Je nach der gewünschten späteren Anordnung des Sicherheitselements 60 auf einem Datenträger kann die Schichtenfolge des Dünnschichtaufbaus 70 variiert werden. Beispielsweise kann auf dem Gitterbild 20 auch zuerst eine reflektierende Schicht, dann eine hochbrechende dielektrische Schicht und darüber eine Absorberschicht aufgebracht sein. Die Kombination eines erfindungsgemäßen Gitterbilds 20 mit einem Dünnschichtaufbau 70 verbindet den Schimmereffekt des Gitterbilds 20 mit dem Farbkippeffekt des Dünnschichtaufbaus 70 und erlaubt so besonders ansprechende Farbeffekte. Gleichzeitig wird durch die Wechselwirkung der beiden Farbwirkungen die Fälschungssicherheit des Sicherheitselements erhöht.

Das in Fig. 9 dargestellte Sicherheitselement 80 zeigt eine Kombination dreier Sicherheitselemente in einem einzigen Motiv. Ein diffraktives Hologrammelement 82 bildet dabei den Hintergrund für die Wertangabe "5 €". Die Ziffer "5" der Wertangabe ist durch ein erfindungsgemäßes Gitterbild 20 mit einem schimmernden dreidimensionalen Wölbeffekt gebildet. Das Währungssymbol "€" ist durch eine achromatische Mattstruktur 84 mit einem nicht-farbigen, silbrig-matten Erscheinungsbild gebildet und erscheint nicht räumlich, sondern flach in der Ebene des Sicherheitselements 80. Zusätzlich zu diesen offen sichtbaren Echtheitsmerkmalen stellen die Unterteilung des Gitterbilds 20 in Teilelemente 24 und unter Umständen auch die Anordnung der Gitterlinienfehlstellen versteckte Echtheitsmerkmale dar, die mit geeigneten Hilfsmitteln, wie etwa einer Lupe oder einem Mikroskop, geprüft werden können.

Bezugszeichenliste

| | |
|---|---|
| 10 | Banknote |
| 12 | Sicherheitselement |
| 14 | Motiv |
| 16 | Denomination |
| 20 | Gitterbild |
| 22 | diffraktive Gitterstruktur |
| 24 | Teilelemente |
| 26 | Trennbereiche |
| 28, 28' | Gitterlinien |
| 30, 30' | Umrisskontur |
| 32 | Gitterlinienfehlstellen |
| 40 | Kurve |
| 42 | Stufen |
| 44 | Spitzen |
| 46 | Minimum |
| 50 | Gitterlinien |
| 52 | Gitterlinienfehlstellen |
| 54, 56 | Gitterlinien |
| 60 | Sicherheitselement |
| 62 | Folienmaterial |
| 64 | Lackschicht |
| 70 | Dünnschichtaufbau |
| 72 | Absorberschicht |
| 74 | dielektrische Schicht |
| 76 | reflektierende Schicht |
| 80 | Sicherheitselement |
| 82 | Hologrammelement |
| 84 | achromatische Mattstruktur |
| 90 | Teilelement |

**Patentansprüche**

1. Gitterbild (20) zur Darstellung eines Motivs (14) mit einer Umrisskontur (30), wobei das Gitterbild (20) eine diffraktive Gitterstruktur (22) aufweist, die eine Vielzahl von geraden und/oder gekrümmten Gitterlinien (28) enthält, **dadurch gekennzeichnet, dass**

   - die diffraktive Gitterstruktur (22) in eine Vielzahl von Teilelementen (24) unterteilt ist, die jeweils mit ununterbrochenen Gitterlinien (28) gefüllt sind und die voneinander durch quer zu den Gitterlinien (28) verlaufende Trennbereiche (26) getrennt sind, in denen keine Gitterlinien vorliegen und deren Länge, die auch den Abstand der angrenzenden Teilelemente (24) angibt, weniger als 100 $\mu$m beträgt, und dass
   - die ununterbrochenen Gitterlinien (28) in den Teilelementen (24) mit stufenförmig variierenden Abständen und mit unregelmäßig eingestreuten Gitterlinienfehlstellen (32) angeordnet sind, wobei der Abstand der Gitterlinien (28) zwischen 0,5 $\mu$m und 2 $\mu$m stufenförmig variiert, wobei Stufen (42) mindestens 2 Gitterlinien (28) mit gleichem Abstand zur nächsten Gitterlinie aufweisen,
   - und die Abstände benachbarter Gitterlinien (28) für jedes Teilelement (24) als Kurve in Abhängigkeit vom Ort entlang einer Breite des Teilelements (24) darstellbar sind, wobei die Kurve ohne Berücksichtigung der Stufen (42) und der als Spitzen (44) erscheinenden Gitterlinienfehlstellen (32) mindestens ein Minimum und/ oder mindestens ein Maximum und/oder mindestens einen Sattelpunkt aufweist, so dass die diffraktive Gitterstruktur bei Beleuchtung für einen Betrachter das Motiv (14) mit einem schimmernden dreidimensionalen Wölbeffekt erzeugt.

2. Gitterbild nach Anspruch 1, in dem die Teilelemente (24) unregelmäßig variierende Abmessungen aufweisen, vorzugsweise die Teilelemente (24) zusätzlich gekrümmte Begrenzungslinien aufweisen.

3. Gitterbild nach Anspruch 1 oder 2, in dem Teilelemente (24), bezogen auf die Umrisskontur (30) des Motivs, verdreht, verschraubt oder verdrillt sind.

4. Gitterbild nach wenigstens einem der Ansprüche 1 bis 3, in dem die Trennbereiche (26) eine Länge zwischen 1 $\mu$m und 70 $\mu$m, vorzugsweise zwischen 5 $\mu$m und 50 $\mu$m, besonders bevorzugt zwischen 10 $\mu$m und 30 $\mu$m aufweisen.

5. Gitterbild nach wenigstens einem der Ansprüche 1 bis 4, in dem der Abstand der Gitterlinien (28) mit einer unregelmäßig variierenden Stufenbreite und mit unregelmäßig in die Stufen eingestreuten Gitterlinienfehlstellen (32) variiert, wobei die Stufen jeweils zwischen 2 und 7 Gitterlinien (28) mit gleichem Abstand zur nächsten Gitterlinie aufweisen.

6. Gitterbild nach wenigstens einem der Ansprüche 1 bis 5, in dem die Gitterlinien (28) innerhalb eines Teilelements (24) durch Bezierkurven zweiten Grades, durch B-Splines oder durch Non-uniform rational B-Splines (NURBS), insbesondere mit Startpunkt, Endpunkt und nur einem Kontrollpunkt gebildet sind.

7. Gitterbild nach wenigstens einem der Ansprüche 1 bis 6, in dem benachbarte Gitterlinien (28) innerhalb der Teilelemente (24) parallel oder richtungsgleich verlaufen, und/oder sich benachbarte Gitterlinien (28) innerhalb der Teilelemente (24) nicht schneiden und ihre Richtung um weniger als 10°, vorzugsweise um weniger als 3°, besonders bevorzugt um weniger als 1° und ganz besonders bevorzugt um weniger als 0,2° voneinander abweicht.

8. Gitterbild nach wenigstens einem der Ansprüche 1 bis 7, in dem die Gitterlinien (28) der Teilelemente (24) jeweils in Richtung der Umrisskontur (30) des Motivs ausgerichtet sind.

9. Verfahren zum Herstellen eines Gitterbilds (20) zur Darstellung eines mit einem schimmernden dreidimensionalen Wölbeffekt erscheinenden Motivs (14) mit einer Umrisskontur (30), bei dem

   - in einem Substrat eine diffraktive Gitterstruktur (22) mit einer Vielzahl von geraden und/ oder gekrümmten Gitterlinien (28) erzeugt wird,
   - die diffraktive Gitterstruktur (22) mit einer Vielzahl von Teilelementen (24) erzeugt wird, die voneinander durch quer zu den Gitterlinien (28) verlaufende Trennbereiche (26) getrennt sind, in denen keine Gitterlinien vorliegen und deren Länge, die auch den Abstand der angrenzenden Teilelemente (24) angibt, weniger als 100 $\mu$m beträgt,
   - die Teilelemente (24) jeweils mit ununterbrochenen Gitterlinien (28) gefüllt werden,
   - die ununterbrochenen Gitterlinien (28) in den Teilelementen (24) mit stufenförmig variierenden Abständen und mit unregelmäßig eingestreuten Gitterlinienfehlstellen (32) angeordnet werden, wobei der Abstand der Gitterlinien (28) zwischen 0,5 $\mu$m und 2 $\mu$m stufenförmig variiert, wobei Stufen (42) mindestens 2 Gitterlinien (28) mit gleichem Abstand zur nächsten Gitterlinie aufweisen, und

   - wobei die Teilelemente (24) so mit ununterbrochenen Gitterlinien (28) gefüllt werden, dass die Abstände benachbarter Gitterlinien (28) für jedes Teilelement (24) als Kurve in Abhängigkeit vom Ort entlang einer Breite des Teilelements (24) darstellbar sind, wobei die Kurve ohne Berücksichtigung der Stufen (42) und der als Spitzen (44) erscheinenden Gitterlinienfehlstellen (32) mindestens ein Minimum und/ oder mindestens ein Maximum und/ oder mindestens einen Sattelpunkt aufweist.

10. Verfahren nach Anspruch 9, in dem die diffractive Gitterstruktur (22) elektronenstrahllithographisch erzeugt wird.

11. Sicherheitselement mit einem Gitterbild (20) nach wenigstens einem der Ansprüche 1 bis 8 oder einem nach wenigstens einem der Ansprüche 9 oder 10 hergestellten Gitterbild (20), wobei das Gitterbild (20) bevorzugt mit einem Hologrammelement, einer Mattstruktur und/oder einer farbkippenden Dünnschichtanordnung kombiniert ist.

12. Sicherheitselement nach Anspruch 11, in dem das Sicherheitselement ein Sicherheitsfaden, ein Etikett oder ein Transferelement ist.

**13.** Sicherheitspapier mit einem Gitterbild (20) nach wenigstens einem der Ansprüche 1 bis 8, einem nach wenigstens einem der Ansprüche 9 oder 10 hergestellten Gitterbild (20), oder einem Sicherheitselement nach wenigstens einem der Ansprüche 11 bis 12.

**14.** Datenträger mit einem Gitterbild (20) nach wenigstens einem der Ansprüche 1 bis 8, einem nach wenigstens einem der Ansprüche 9 oder 10 hergestellten Gitterbild (20), einem Sicherheitselement nach wenigstens einem der Ansprüche 11 bis 12, oder einem Sicherheitspapier nach Anspruch 13, wobei der Datenträger bevorzugt eine Banknote, ein Wertdokument, ein Pass, eine Ausweis- oder Kreditkarte oder eine Urkunde ist.

**15.** Prägeform zum Erzeugen einer Prägestruktur, mit einem Hauptkörper mit einer diffraktiven Gitterstruktur, die eine Vielzahl von geraden und/ oder gekrümmten Gitterlinien enthält und die bei Beleuchtung für einen Betrachter ein vorgegebenes Motiv mit einem schimmernden dreidimensionalen Wölbeffekt erzeugt, wobei

- die diffraktive Gitterstruktur in eine Vielzahl von Teilelementen unterteilt ist, die jeweils mit ununterbrochenen Gitterlinien gefüllt sind und die voneinander durch quer zu den Gitterlinien verlaufende Trennbereiche getrennt sind, in denen keine Gitterlinien vorliegen und deren Länge, die auch den Abstand der angrenzenden Teilelemente angibt, weniger als 100 $\mu$m beträgt,

- die ununterbrochenen Gitterlinien in den Teilelementen mit stufenförmig variierenden Abständen und mit unregelmäßig eingestreuten Gitterlinienfehlstellen angeordnet sind, wobei der Abstand der Gitterlinien zwischen 0,5 $\mu$m und 2 $\mu$m stufenförmig variiert, wobei Stufen mindestens 2 Gitterlinien mit gleichem Abstand zur nächsten Gitterlinie aufweisen,
- und die Abstände benachbarter Gitterlinien für jedes Teilelement als Kurve in Abhängigkeit vom Ort entlang einer Breite des Teilelements darstellbar sind, wobei die Kurve ohne Berücksichtigung der Stufen und der als Spitzen erscheinenden Gitterlinienfehlstellen mindestens ein Minimum rund/ oder mindestens ein Maximum und/ oder mindestens einen Sattelpunkt aufweist.

**Claims**

**1.** A grating image (20) for depicting a motif (14) that has an outline contour (30), the grating image (20) comprising a diffractive grating pattern (22) that includes a plurality of straight and/or curved grating lines (28), **characterized in that**

- the diffractive grating pattern (22) is divided into a plurality of sub-elements (24) that are each filled with uninterrupted grating lines (28) and that are separated from one another by separation regions (26) that run transversely to the grating lines (28), in which no grating lines are present, and whose length, which also specifies the spacing of the adjacent sub-elements (24), is less than 100 $\mu$m, and **in that**
- the uninterrupted grating lines (28) in the sub-elements (24) are arranged having spacings that vary in steps and having irregularly interspersed grating line defects (32), the spacing of the grating lines (28) varying in steps between 0.5 $\mu$m and 2 $\mu$m, wherein steps (42) comprise at least 2 grating lines (28) having the same spacing to the next grating line,
- and the spacings of adjacent grating lines (28) are representable for each sub-element (24) as a curve as a function of the location along a width of the sub-element (24), the curve comprising, without taking into account the steps (42) and the grating line defects (32) that appear as peaks (44), at least one minimum and/or at least one maximum and/ or at least one saddle point, such that the diffractive grating pattern, when illuminated, produces for a viewer the motif (14) having a shimmering three-dimensional bulge effect.

**2.** The grating image according to claim 1, in which the sub-elements (24) have irregularly varying dimensions, preferably in that the sub-elements (24) additionally have curved boundary lines.

**3.** The grating image according to claim 1 or 2, in which sub-elements (24) are rotated, screwed or twisted with respect to the outline contour (30) of the motif.

**4.** The grating image according to at least one of claims 1 to 3, in which the separation regions (26) have a length between 1 $\mu$m and 70 $\mu$m, preferably between 5 $\mu$m and 50 $\mu$m, and particularly preferably between 10 $\mu$m and 30 $\mu$m.

**5.** The grating image according to at least one of claims 1 to 4, in which the spacing of the grating lines (28) varies with an irregularly varying step width and with irregularly interspersed grating line defects (32) in the steps, the steps each comprising between 2 and 7 grating lines (28) having identical spacing to the next grating line.

6. The grating image according to at least one of claims 1 to 5, in which the grating lines (28) within a sub-element (24) are formed by second-order Bezier curves, by B-splines or by non-uniform rational B-splines (NURBS), especially having a starting point, an end point and only one control point.

7. The grating image according to at least one of claims 1 to 6, in which adjacent grating lines (28) within the sub-elements (24) run parallel or in the same direction, and/or in that adjacent grating lines (28) within the sub-elements (24) do not intersect and their directions deviate from one another by less than 10°, preferably by less than 3°, particularly preferably by less than 1° and very particularly preferably by less than 0.2°.

8. The grating image according to at least one of claims 1 to 7, in which the grating lines (28) of the sub-elements (24) are each oriented in the direction of the outline contour (30) of the motif.

9. A method for manufacturing a grating image (20) for depicting a motif (14) that appears having a shimmering three-dimensional bulge effect and that has an outline contour (30), in which

- in a substrate is produced a diffractive grating pattern (22) having a plurality of straight and/ or curved grating lines (28),
- the diffractive grating pattern (22) is produced having a plurality of sub-elements (24) that are separated from one another by separation regions (26) that run transversely to the grating lines (28), in which no grating lines are present, and whose length, which also specifies the spacing of the adjacent sub-elements (24), is less than 100 μm,
- the sub-elements (24) are each filled with uninterrupted grating lines (28),
- the uninterrupted grating lines (28) in the sub-elements (24) are arranged having spacings that vary in steps and having irregularly interspersed grating line defects (32), the spacing of the grating lines (28) varying in steps between 0.5 μm and 2 μm, wherein steps (42) comprise at least 2 grating lines (28) having the same spacing to the next grating line, and
- the sub-elements (24) being filled with uninterrupted grating lines (28) in such a way that the spacings of adjacent grating lines (28) are representable for each sub-element (24) as a curve as a function of the location along a width of the sub-element (24), the curve comprising, without taking into account the steps (42) and the grating line defects (32) that appear as peaks (44), at least one minimum and/ or at least one maximum and/or at least one saddle point.

10. The method according to claim 9, in which the diffractive grating pattern (22) is produced electron beam lithographically.

11. A security element having a grating image (20) according to at least one of claims 1 to 8 or a grating image (20) manufactured according to at least one of claims 9 or 10, the grating image (20) preferably being combined with a hologram element, a matte pattern and/or a color-shifting thin-film arrangement.

12. The security element according to claim 11, in which the security element is a security thread, a label or a transfer element.

13. A security paper having a grating image (20) according to at least one of claims 1 to 8, a grating image (20) manufactured according to one of claims 9 or 10, or a security element according to at least one of claims 11 to 12.

14. A data carrier having a grating image (20) according to at least one of claims 1 to 8, a grating image (20) manufactured according to at least one of claims 9 or 10, a security element according to at least one of claims 11 to 12, or a security paper according to claim 13, the data carrier preferably being a banknote, a value document, a passport, an identification or credit card, or a certificate.

15. An embossing mold for producing an embossing pattern, having a main body having a diffractive grating pattern that includes a plurality of straight and/or curved grating lines and that, when illuminated, produces for a viewer a specified motif having a shimmering three-dimensional bulge effect,

- the diffractive grating pattern being divided into a plurality of sub-elements that are each filled with uninterrupted grating lines and that are separated from one another by separation regions that run transversely to the grating lines, in which no grating lines are present, and whose length, which also specifies the spacing of the adjacent sub-elements, is less than 100 $\mu$m,

- the uninterrupted grating lines in the sub-elements being arranged having spacings that vary in steps and having irregularly interspersed grating line defects, the spacing of the grating lines varying in steps between 0.5 $\mu$m and 2 $\mu$m, steps comprising at least 2 grating lines having the same spacing to the next grating line,
- and the spacings of adjacent grating lines being representable for each sub-element as a curve as a function of the location along a width of the sub-element, the curve comprising, without taking into account the steps and the grating line defects that appear as peaks, at least one minimum and/or at least one maximum and/or at least one saddle point.

## Revendications

1. Image tramée (20) pour la représentation d'un motif (14) avec un contour de profil (30), l'image tramée (20) comportant une structure tramée diffractive (22), qui contient une pluralité de lignes de trame droites et/ou courbées (28), **caractérisée en ce que**

   - la structure de trame diffractive (22) est subdivisée en une pluralité de parties d'élément (24), qui sont respectivement remplis de lignes de trame ininterrompues (28) et qui sont séparées les unes des autres par des zones de séparation (26) passant en travers des lignes de trames (28) dans lesquelles il n'y a aucune ligne de trame et dont la longueur, qui indique également l'espacement des parties d'élément limitrophes (24), est inférieure à 100 $\mu$m, et **en ce que**
   - les lignes de trame ininterrompues (28) sont disposées dans les parties d'élément (24) avec des espacements variant en forme de gradins et avec des endroits vides de lignes de trame (32) répartis de manière irrégulière, l'espacement des lignes de trame (28) variant en forme de gradins entre 0,5 $\mu$m et 2 $\mu$m, les gradins (42) comportant au moins 2 lignes de trame (28) avec le même espacement par rapport à la ligne de trame suivante,
   - et les espacements des lignes de trame voisines (28) pour chaque élément partiel (24) pouvant être représenté sous forme de courbe en fonction du lieu le long d'une largeur de l'élément partiel (24), la courbe comportant sans tenir compte des gradins (42) et des points vides de lignes de trame (32) apparaissant sous forme de pointes (44) au moins un minimum et/ou au moins un maximum et/ou au moins un point col, de sorte que la structure de trame diffractive avec un éclairage pour un observateur, produit le motif (14) avec un effet de gondolement luisant tridimensionnel.

2. Image tramée selon la revendication 1, dans laquelle les parties d'élément (24) comportent des dimensions variant de manière irrégulière, de préférence, les parties d'élément (24) présentant en plus des lignes de délimitation courbées.

3. Image tramée selon la revendication 1 ou 2, dans laquelle les parties d'élément (24) sont tournées, hélicoïdales ou torsadées, par rapport au contour de profil (30) du motif.

4. Image tramée selon au moins l'une quelconque des revendications 1 à 3, dans laquelle les zones de séparation (26) comportent une longueur se situant entre 1 $\mu$m et 70 $\mu$m, de préférence entre 5 $\mu$m et 50 $\mu$m, de façon particulièrement préférée entre 10 $\mu$m et 30 $\mu$m.

5. Image tramée selon au moins l'une quelconque des revendications 1 à 4, dans laquelle l'espacement des lignes de trame (28) varie avec une largeur de gradin variant de manière irrégulière et avec des points vides de lignes de trame (32) dispersés de manière irrégulière dans les gradins, les gradins présentant respectivement entre 2 et 7 lignes de trame (28) avec le même espacement par rapport à la ligne de trame suivante.

6. Image tramée selon au moins l'une quelconque des revendications 1 à 5, dans laquelle les lignes de trame (28) sont formées à l'intérieur d'un élément partiel (24) par des courbes de Bézier du deuxième degré, par des B-splines ou par des B-splines rationnelles non uniformes (NURBS), en particulier avec point initial, point final et seulement un point de contrôle.

7. Image tramée selon au moins l'une quelconque des revendications 1 à 6, dans laquelle les lignes de trame voisines (28) passent à l'intérieur des parties d'élément (24) parallèlement ou dans la même direction et/ou les lignes de trame (28) voisines ne se coupant pas à l'intérieur des parties d'élément (24) et leur direction s'écartant de moins de 10°, de préférence de moins de 3°, de façon particulièrement préférée de moins de 1° et de façon tout particulièrement préférée de moins de 0,2° les unes par rapport aux autres.

8. Image tramée selon au moins l'une quelconque des revendications 1 à 7, dans laquelle les lignes de trame (28) des parties d'élément (24) sont respectivement orientées en direction du contour de profil (30) du motif.

9. Procédé destiné à réaliser une image tramée (20) pour la représentation d'un motif (14) apparaissant avec un effet de gondolement luisant tridimensionnel avec un contour de profil (30), pour lequel

- une structure de trame diffractive (22) est produite dans un substrat avec une pluralité de lignes de trame (28) droites et/ou courbées,
- la structure de trame diffractive (22) est produite avec une pluralité de parties d'élément (24), qui sont séparées les unes par rapport aux autres par des zones de séparation (26) passant en travers des lignes de trame (28), dans lesquelles il n'y a aucune ligne de trame et dont la longueur, qui indique également l'espacement des parties d'élément limitrophes (24), est inférieure à 100 $\mu$m,
- les parties d'élément (24) sont respectivement remplis avec des lignes de trame ininterrompues (28),
- les lignes de trame ininterrompues (28) sont disposées dans les parties d'élément (24) avec des espacements variant en forme de gradins et avec des endroits vides de lignes de trame (32) répartis de manière irrégulière, l'espacement des lignes de trame (28) variant en forme de gradins entre 0,5 $\mu$m et 2 $\mu$m, les gradins (42) comportant au moins 2 lignes de trame (28) avec le même espacement par rapport à la ligne de trame suivante,
- les parties d'élément (24) étant remplies de lignes de trame ininterrompues (28) de sorte que les intervalles des lignes de trame voisines (28) pour chaque partie d'élément (24) pouvant être représentés sous forme de courbe en fonction du lieu le long d'une largeur de partie d'élément (24), la courbe comportant au moins un minimum et/ou au moins un maximum et/ou au moins un point col, sans tenir compte des gradins (42) et des points vides de lignes de trame (32) apparaissant sous forme de pointes (44).

10. Procédé selon la revendication 9, dans lequel la structure de trame diffractive (22) est produite de manière lithographique à faisceau électronique.

11. Elément de sécurité avec une image tramée (20) selon au moins l'une quelconque des revendications 1 à 8 ou une image tramée (20) réalisée selon au moins l'une quelconque des revendications 9 ou 10, l'image tramée (20) étant de préférence combinée avec un élément à hologramme, une structure mate et/ou un agencement à couche mince à basculement de couleur.

12. Elément de sécurité selon la revendication 11, dans lequel l'élément de sécurité est un fil de sécurité, une étiquette ou un élément de transfert.

13. Papier de sécurité avec une image tramée (20) selon au moins l'une quelconque des revendications 1 à 8, une image tramée (20) réalisée selon au moins l'une quelconque des revendications 9 ou 10 ou un élément de sécurité selon au moins l'une quelconque des revendications 11 à 12.

14. Support de données avec une image tramée (20) selon au moins l'une quelconque des revendications 1 à 8, une image tramée (20) réalisée selon au moins l'une quelconque des revendications 9 ou 10, un élément de sécurité selon au moins l'une quelconque des revendications 11 à 12 ou un papier de sécurité selon la revendication 13, le support de données étant de préférence un billet de banque, un document de valeur, un passeport, une carte d'identité ou de crédit ou un document.

15. Matrice destinée à produire une structure d'empreinte, avec un corps principal avec une structure de trame diffractive, qui contient une pluralité de lignes de trame droites et/ou courbées et qui produit avec éclairage pour un observateur, un motif prédéfini, avec un effet de gondolement luisant tridimensionnel,

- la structure de trame diffractive étant subdivisée en une pluralité de parties d'élément, qui sont respectivement remplies de lignes de trame ininterrompues et qui sont séparées les unes des autres par des zones de séparation passant en travers des lignes de trame, dans lesquelles il n'y a aucune ligne de trame et dont la longueur qui indique également l'espacement des parties d'élément limitrophes, est inférieure à 100 $\mu$m,
- les lignes de trame ininterrompues étant disposées dans les parties d'élément avec des espacements variant en forme de gradins et avec des endroits vides de lignes de trame répartis de manière irrégulière, l'espacement des lignes de trame variant en forme de gradins entre 0,5 $\mu$m et 2 $\mu$m, les gradins comportant au moins 2 lignes de trame avec le même espacement par rapport à la ligne de trame suivante,

- et les intervalles des lignes de trame voisines pour chaque partie d'élément étant représentables sous forme de courbe en fonction du lieu le long d'une largeur de partie d'élément, la courbe comportant, au moins un minimum et/ou au moins un maximum et/ou au moins un point col, sans tenir compte des gradins et des points vides de lignes de trame apparaissant sous forme de pointes.

10

12

14

16  5

## Fig. 1

L

12

20

22

26  24

28'  28

30'  30

B

## Fig. 2

Fig. 3

Fig. 4

Fig. 5a

Fig. 5b

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005038500 A1
- WO 2005071444 A2
- WO 2010034420 A1
- DE 102007009646 A1
- DE 10308327 A1
- WO 2009074122 A2
- JP 2006327129 A
- US 2001003035 A1